# EUROPÄISCHE PATENTSCHRIFT

(11) **EP 1 505 424 B1**
(45) Veröffentlichungstag und Bekanntmachung des Hinweises auf die Patenterteilung: **18.04.2007**
(21) Anmeldenummer: 04103465.3
(22) Anmeldetag: 21.07.2004
(51) Int. Cl.: G02B 21/00

(54) **Rastermikroskop mit optischer Einkoppelvorrichtung für externes Licht**
Scanning microscope with optical coupling port for external light
Microscope à balayage avec un moyen de couplage optique pour lumière externe

(30) Priorität: 02.08.2003 DE 10335466
(43) Veröffentlichungstag der Anmeldung: 09.02.2005
(73) Patentinhaber: Leica Microsystems CMS GmbH, 35578 Wetzlar (DE)
(72) Erfinder: Storz, Rafael, 69115 Heidelberg (DE); Knebel, Werner, 76709 Kronau (DE)
(74) Vertreter: Reichert, Werner Franz

(56) Entgegenhaltungen:
- EP-A- 1 245 987
- WO-A-92/00540
- DE-A- 19 902 625
- US-A1- 2001 030 800
- US-A1- 2002 020 800

## Beschreibung

Die Erfindung betrifft die Verwendung eines Rastermikroskops zur spektralen Detektion von Licht aus einem Experiment.

In der Rastermikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt über einen Detektionsstrahlengang kommenden Lichtes wird mit einem Detektor in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Rastermikroskopie wird ein Objekt mit dem Fokus eines Lichtstrahles in drei Dimensionen abgetastet.

Ein konfokales Rastermikroskop umfasst im Allgemeinen eine Lichtquelle, eine Abbildungsoptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird oft über den Strahlteiler, der beispielsweise als Neutralstrahlteiler oder als dichroitischer Strahlteiler ausgeführt sein kann, eingekoppelt. Neutralstrahlteiler haben den Nachteil, dass je nach Teilungsverhältnis viel Anregungs- oder viel Detektionslicht verloren geht.

Das vom Objekt kommende Detektionslicht (z.B. Fluoreszenz- oder Reflexionslicht) gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealerweise einen Mäander beschreibt. (Abtasten einer Zeile in x-Richtung bei konstanter y-Position, anschließend x-Abtastung anhalten und per y-Verstellung auf die nächste abzutastende Zeile schwenken und dann, bei konstanter y-Position, diese Zeile in negative x-Richtung abtasten u.s.w.). Um eine schichtweise Bilddatennahme zu ermöglichen, wird der Probentisch oder das Objektiv nach dem Abtasten einer Schicht verschoben und so die nächste abzutastende Schicht in die Fokusebene des Objektivs gebracht.

Bei vielen Anwendungen werden Proben mit mehreren Markern, beispielsweise mehreren unterschiedlichen Fluoreszenzfarbstoffen präpariert. Diese Farbstoffe können sequentiell, beispielsweise mit Beleuchtungslichtstrahlen, die unterschiedliche Anregungswellenlängen aufweisen, angeregt werden.

In der Rastermikroskopie werden meist aufwendige und leistungsfähige Detektoren, wie beispielsweise Multibanddetektoren oder Spektrometer, eingesetzt, die beispielsweise eine simultane Detektion des von der Probe ausgehenden Detektionslichtes ermöglichen. Aus der Offenlegungsschrift DE 43 30 347 A1 ist eine Vorrichtung zur Selektion und Detektion mindestens zweier Spektralbereiche eines Lichtstrahls, mit einer Selektionseinrichtung und einer Detektionseinrichtung bekannt. Die Vorrichtung ist zur zuverlässigen gleichzeitigen Selektion und Detektion unterschiedlicher Spektralbereiche bei hoher Ausbeute und bei einfachster Konstruktion derart ausgestaltet, dass die Selektionseinrichtung Mittel zur spektralen Zerlegung des Lichtstrahls und Mittel einerseits zum Ausblenden eines ersten Spektralbereichs und andererseits zur Reflexion zumindest eines Teils des nicht ausgesendeten Spektralbereichs und die Detektionseinrichtung einen im Strahlengang des ausgeblendeten ersten Spektralbereichs angeordneten ersten Detektor und einen im Strahlengang des reflektierten Spektralbereichs angeordneten zweiten Detektor umfasst. Als Mittel zum Ausblenden eines ersten Spektralbereichs und andererseits zur Reflexion zumindest eines Teils des nicht ausgeblendeten Spektralbereichs ist vorzugsweise eine Spaltblendenvorrichtung mit verspiegelten Blendenbacken vorgesehen. Die Vorrichtung ist insbesondere als Multibanddetektor in einem Scanmikroskop einsetzbar.

Die deutsche Offenlegungsschrift DE 199 02 625 A1 offenbart eine Vorrichtung zur gleichzeitigen Detektion mehrerer Spektralbereiche eines Lichtstrahls, insbesondere zur Detektion des Lichtstrahls eines Laserscanners im Detektionsstrahlengang eines Konfokalmikroskops. Zur Realisierung eines einfachen Aufbaus bei geringer Baugröße und unter Vermeidung des Defokussiereffektes ist eine Anordnung zum spektralen Auffächern des Lichtstrahls und eine Anordnung zur Aufspaltung des aufgefächerten Strahls aus der Dispersionsebene heraus in Spektralbereiche und anschließenden Detektion der aufgespaltenen Spektralbereiche vorgesehen.

Es ist die Aufgabe der vorliegenden Erfindung für weitgehend beliebige optische Experimente einen Detektor bereitzustellen.

Diese Aufgabe wird durch die Verwendung eines Rastermikroskops zur spektralen Detektion von Licht aus einem Experiment gelöst, das die Merkmale des Anspruchs 1 aufweist.

Die Erfindung hat den Vorteil, dass die meist sehr aufwendigen und meist sehr leistungsfähigen Detektoren eines Rastermikroskops für externe optische Untersuchungen nutzbar sind. Bei den externen optischen Untersuchungen handelt es sich um Experimente die abseits vom Rastermikroskop durchgeführt werden, wobei das Rastermikroskop als Detektionsvorrichtung "missbraucht" wird.

Das Rastermikroskopv beinhaltet einen Multibanddetektor oder ein Spektrometer.

Im Rastermikroskop ist ein Lichtleiter vorgesehen, der das andere Licht als das Detektionslicht der Einkoppelvorrichtung zuführt. Vorzugsweise ist eine Auskoppeloptik zum Auskoppeln des anderen Lichts aus dem Lichtleiter vorgesehen.

In einer besonders bevorzugten Ausführungsvariante weist die Einkoppelvorrichtung eine Steckkupplung auf, auf die ein Lichtleitfaserstecker aufgesteckt werden kann.

Vorzugsweise ist ein Umlenkelement in den Detektionsstrahlengang einbringbar, das beispielsweise als Umlenkspiegel ausgeführt sein kann und das das andere Licht zu dem Detektor lenkt. Vorzugsweise erfolgt das Einbringen des Umlenkelements motorisch gesteuert.

In einer besonderen Ausgestaltungsform weist die Einkoppelvorrichtung zumindest eine Strahlfalle auf. Diese vermeidet, dass außer dem anderen Licht weiteres Licht, beispielsweise Detektionslicht aus dem Detektionsstrahlengang oder Streulicht, zu dem Detektor gelangt. Die Strahlfalle ist vorzugsweise so ausgelegt, dass sie mit Aufstecken des Lichtleiters auf die Steckkopplung aktivierbar ist.

Bei einer bevorzugten Ausführungsvariante des Rastermikroskops weist die Einkoppelvorrichtung eine vorzugsweise automatisch arbeitende Verschlussvorrichtung auf, die bei Entfernen des Lichtleiters das Rastermikroskop nach außen weitgehend lichtdicht abschließt und so insbesondere vermeidet, dass beispielsweise gefährliche Laserstrahlung aus dem Rastermikroskop austritt.

In einer ganz besonders bevorzugten Ausgestaltungsform ist das andere Licht Transmissionslicht. Es ist hierdurch beispielsweise ermöglicht, gleichzeitig oder sequentiell sowohl ein Fluoreszenzabbild als auch ein Absorptionsbild einer Probe zu erzeugen. Durch geeignete Auswahl der Parameter kann ein "real color" Transmissionsbild erzeugt werden. Hierzu wird die Probe vorzugsweise sequentiell mit Beleuchtungslicht von drei unterschiedlichen Wellenlängen beleuchtet und die erhaltenen drei Transmissionsbilder beim Zusammensetzen zu einem "real color" Transmissionsbild geeignet, gewichtet. Bei Beleuchtung der Probe mit einem ganzen Beleuchtungsspektrum, wie es beispielsweise mit Hilfe von Lichtquellen auf der Basis von "Photonic Band Gab"-Material erzeugbar ist, kann ein Absorptionsspektrum aufgenommen werden. Das Transmissionslicht wird vorzugsweise von einem Kondensor kollimiert und in den zur Einkoppelvorrichtung führenden Lichtleiter eingekoppelt. Als alternative Abgreifposition für das Transmissionslicht ist auch das Lampen- oder Spiegelhaus verwendbar.

In der Zeichnung ist der Erfindungsgegenstand schematisch dargestellt und wird anhand der Figuren nachfolgend beschrieben, wobei gleich wirkende Bauteile mit denselben Bezugszeichen versehen sind. Dabei zeigen:
- Fig. 1: Ein Rastermikroskop.
- Fig. 2: einen Scankopf mit einer Einkoppelvorrichtung,
- Fig. 3: ein anderes Rastermikroskop und
- Fig. 4: ein weiteres Rastermikroskop.

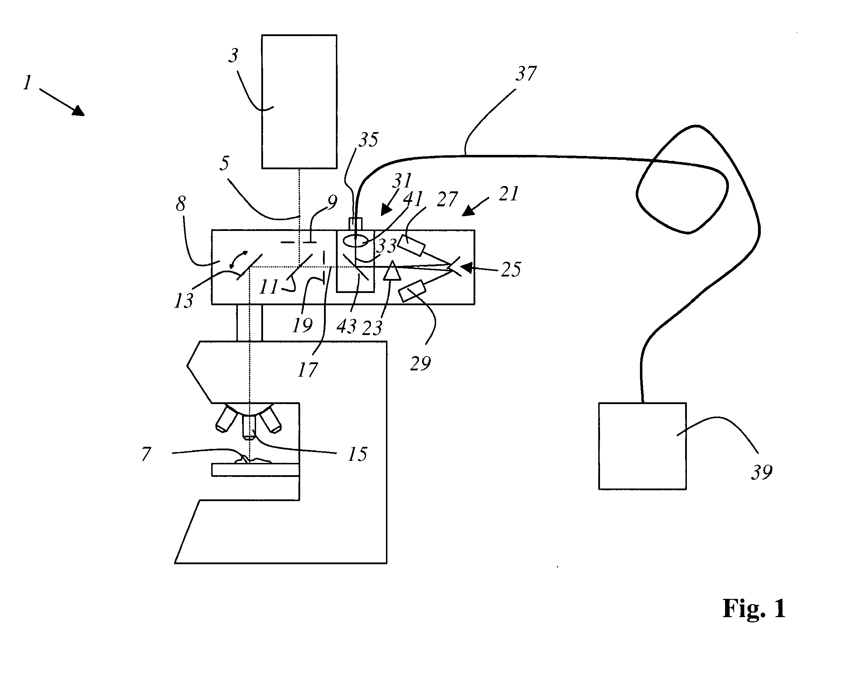

Fig. 1 zeigt ein Rastermikroskop 1 mit einer Lichtquelle 3, die einen Beleuchtungslichtstrahl 5 zur Beleuchtung einer Probe 7 erzeugt. Das Rastermikroskop ist als konfokales Rastermikroskop ausgestaltet. Für den konventionellen Betrieb wird der Beleuchtungslichtstrahl 5 in den Scankopf 8 eingekoppelt, wo er nach Passieren der Beleuchtungslochblende 9 zu einem Hauptstrahlteiler 11 gelangt, der den Beleuchtungslichtstrahl 5 zu einem kardanisch aufgehängten Scanspiegel 13 reflektiert. Der kardanisch aufgehängte Scanspiegel 13 führt den Beleuchtungslichtstrahl 5 durch die nicht gezeigte Tubus- und Scanoptik und durch das Mikroskopobjektiv 15 hindurch über bzw. durch die Probe 7. Das von der Probe ausgehende Detektionslicht 17 gelangt auf dem umgekehrten Lichtweg durch das Mikroskopobjektiv 15 durch die nicht gezeigten Scan- und Tubusoptiken sowie über den kardanisch aufgehängten Scanspiegel 13 zurück zum Strahlteiler 11, passiert diesen und die nachfolgende Detektionslochblende 19 und gelangt schließlich zum Detektor 21. Der Detektor 21 ist bei diesem Rastermikroskop 1 als Multibanddetektor ausgeführt. Er beinhaltet ein dispersives Element 23, das als Prisma ausgestaltet ist und das das Detektionslicht 17 räumlich spektral aufspaltet. Das räumlich spektral aufgespaltene Detektionslicht 17 wird von einer Spiegelanordnung 25 in zwei Spektralbereiche getrennt und zur zwei verschiedenen Einzeldetektoren 27, 29, die jeweils als Photomultiplier ausgestaltet sind, geleitet.

In dem Detektionsstrahlengang ist eine Einkoppelvorrichtung 31 einbringbar, mit der anderes Licht 33 als das Detektionslicht 17 in den Detektionsstrahlengang einkoppelbar und im Detektor 21 zuführbar ist. Die Einkoppelvorrichtung umfasst eine Steckkupplung 35, auf die ein mit einem Stecker versehener Lichtleiter 37 aufgesteckt ist, der das andere Licht 33 von einem externen Experiment 39 zu der Einkoppelvorrichtung 31 transportiert. Die Einkoppelvorrichtung 31 beinhaltet eine Auskoppeloptik 41 zur Auskopplung des anderen Lichts aus dem Lichtleiter 37 und einen Spiegel 43, der das andere Licht auf die optische Achse des Detektionsstrahlengangs lenkt.

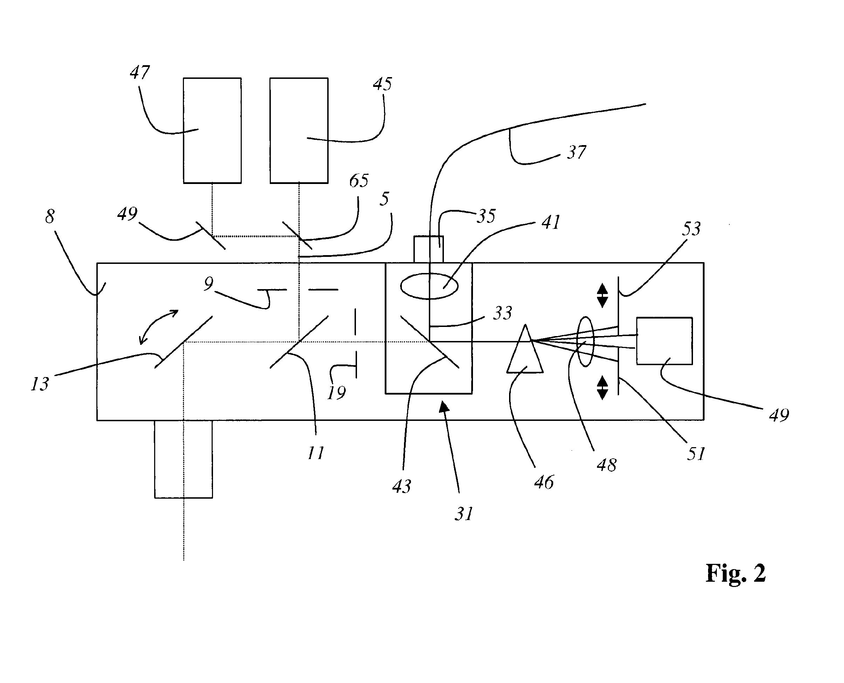

Fig. 2 zeigt den Scankopf 8 eines anderen konfokalen Rastermikroskops, bei dem als Lichtquelle zwei Halbleiterlaser 45, 47 vorgesehen sind. Das Licht der Halbleiterlaser wird mit Hilfe eines Umlenkspiegels 49 und eines Strahlvereinigers 65 zu einem Beleuchtungslichtstrahl 5 vereinigt und dann, wie bereits bezüglich Fig. 1 beschrieben, in den Scankopf 8 eingekoppelt. Das andere Licht 33 wird über den Lichtleiter 37 zu der Einkoppelvorrichtung 31 transportiert, dort mit Hilfe der Auskoppeloptik 41 kollimiert und über den Umlenkspiegel 43 zu dem Prisma 46 gelenkt, das das andere Licht 33 räumlich spektral aufspaltet. Das räumlich spektral aufgespaltene andere Licht wird mit Hilfe der Feldlinse 48 zu einer Fokuslinie fokussiert, in der zwei verschiebbar angeordnete Blendenbacken den zu detektierenden spektralen Anteil des anderen Lichts ausschneiden und zum Einzeldetektor 49 gelangen lassen. Durch Verschieben der Blendenbacken 51, 53 lässt sich einerseits die Lage des zu detektierenden Spektralbereichs als auch andererseits die Breite des zu detektierenden Spektralbereichs einstellen.

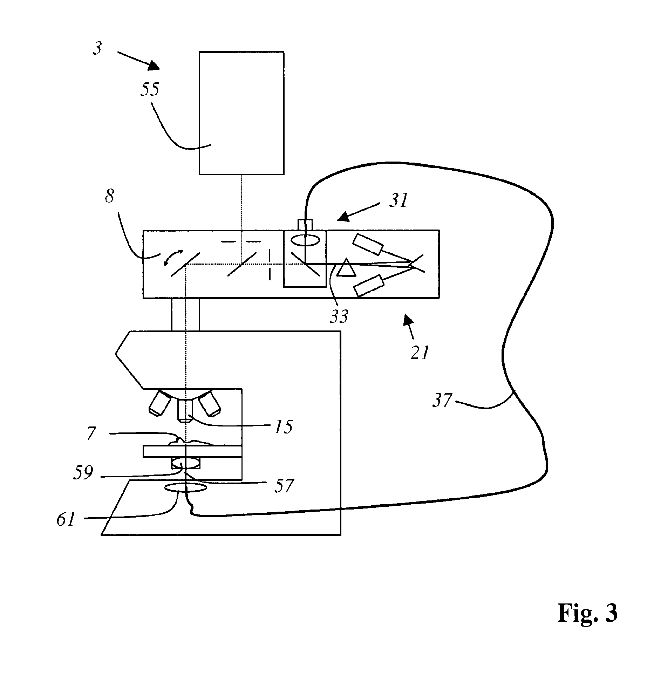

Fig. 3 zeigt ein konfokales Rastermikroskop, bei dem das andere Licht 33 als Transmissionslicht mit dem Lichtleiter 37 zu der Einkoppelvorrichtung 31 transportiert wird. Die Lichtquelle 3 ist bei diesem Rastermikroskop als Kontinuumslaser 55, der "Photonic Band Gab"-Material beinhaltet, ausgeführt. Das Rastermikroskop ist insbesondere dazu geeignet, ein Absorptionsspektrum der Probe 7 aufzunehmen. Das Transmissionslicht 57 wird von einem Kondensor 59 kollimiert und mit Hilfe der Einkoppeloptik 61 in den Lichtleiter 37 eingekoppelt.

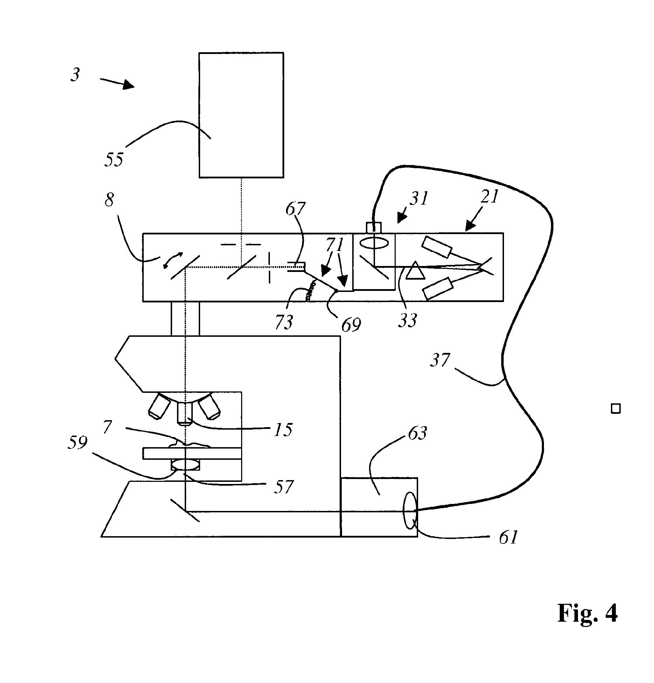

Fig. 4 zeigt ein weiteres konfokales Rastermikroskop, bei dem als anderes Licht 33 Transmissionslicht 57 verwendet wird. Als Abgreifposition für das Transmissionslicht 57 ist in dieser Ausführungsform das Lampenhaus 63 gewählt, das die Einkoppeloptik 61 zur Einkopplung des Transmissionslichts in den Lichtleiter 37 beinhaltet. In dieser Variante ist eine Strahlfalle 67 vorgesehen. Diese vermeidet, dass außer dem Transmissionslicht 57 weiteres Licht, beispielsweise Detektionslicht 17 aus dem Detektionsstrahlengang oder Streulicht, zu dem Detektor 21 gelangt. Die Strahlfalle 67 wird beim Einbringen der Einkoppelvorrichtung 31 über eine sich um eine Drehachse 69 drehende Hebelvorrichtung 71 in die Arbeitsposition gebracht. Hierbei wird eine Zugfeder 73 gespannt, die die Strahlfalle bei Entfernen der Einkoppelvorrichtung 31 aus dem Strahlengang zieht.

### Bezugszeichenliste:

- 1: Rastermikroskop
- 3: Lichtquelle
- 5: Beleuchtungslichtstrahl
- 7: Probe
- 8: Scankopf
- 9: Beleuchtungslochblende
- 11: Hauptstrahlteiler
- 13: Scanspiegel
- 15: Mikroskopobjektiv
- 17: Detektionslicht
- 19: Detektionslochblende
- 21: Detektor
- 23: dispersives Element
- 25: Spiegelanordnung
- 27: Einzeldetektor
- 29: Einzeldetektor
- 31: Einkoppelvorrichtung
- 33: anderes Licht
- 35: Steckkupplung
- 37: Lichtleiter
- 39: externes Experiment
- 41: Auskoppeloptik
- 43: Spiegel
- 45: Halbleiterlaser
- 46: Prisma
- 47: Halbleiterlaser
- 48: Feldlinse
- 49: Umlenkspiegel
- 51: Blendenbacke
- 53: Blendenbacke
- 55: Kontinuumslaser
- 57: Transmissionslicht
- 59: Kondensor
- 61: Einkoppeloptik
- 63: Lampenhaus
- 65: Strahlvereiniger
- 67: Strahlfalle
- 69: Drehachse
- 71: Hebelvorrichtung
- 73: Zugfeder

## Patentansprüche

1. Verwendung eines Rastermikroskops (1) zur spektralen Detektion von Licht aus einem Experiment, wobei das Rastermikroskop (1) eine Lichtquelle (3) zur Beleuchtung einer Probe (3) umfasst, einen Detektionsstrahlengang definiert, wobei im Detektionsstrahlengang ein Multibanddetektor oder ein Spektrometer angeordnet ist, um das von der Probe ausgehende Detektionslicht (17) mit einem dispersiven Element (23) spektral aufzuspalten und zu detektieren, dass in das Rastermikroskop (1) eineEinkoppelvorrichtung (31) vor dem dispersiven Element (23) einbringbar ist, wobei die Einkoppelvorrichtung (31) mit einem Lichtleiter (37) verbunden ist, der Licht vom Experiment, das abseits des Rastermikroskops (1) durchgeführt wird, der Einkoppelvorrichtung (31) zuführt, die das Licht parallel in den Detektionsstrahlengang einkoppelt, auf die optische Achse des Detektionsstrahlengangs lenkt und über das dispersive Element (23) dem Multibanddetektor oder Spektrometer zuführt.

2. Verwendung des Rastermikroskops (1) nach Anspruch 1, **dadurch gekennzeichnet, dass** eine Spiegelanordnung (25) vorgesehen ist, die das spektral aufgespaltene Detektionslicht zwei verschiedenen Einzeldetektoren (27, 29) zuführt.

3. Verwendung des Rastermikroskops nach Anspruch 1, **dadurch gekennzeichnet, dass** das Experiment an der Probe selbst durchgeführt wird und dass Transmissionslicht der Probe (7) der Einkoppelvorrichtung (31) zugeführt wird.

4. Verwendung des Rastermikroskops Anspruch 1, **dadurch gekennzeichnet, dass** die Einkoppelvorrichtung (31) eine Steckkupplung (35) zur Verbindung mit dem mit einem Stecker versehenen Lichtleiter (37) umfasst, dass ferner eine Auskoppeloptik (41) zum Auskoppeln des Lichtes aus dem Lichtleiter (37) vorgesehen ist und dass ein Spiegel der Einkoppelvorrichtung (31) das Licht aus dem Lichtleiter (37) auf die optische Achse des Detektionsstrahlengangs lenkt.

5. Verwendung des Rastermikroskops (1) nach einem der Ansprüche 1 bis 4, **dadurch gekennzeichnet, dass** eine Verschlussvorrichtung die Einkoppelvorrichtung (31) automatisch nach außen weitgehend lichtdicht abschließt, wenn der Lichtleiter (37) entfernt wird.

6. Verwendung des Rastermikroskops (1) nach einem der Ansprüche 1 bis 5, **dadurch gekennzeichnet, dass** zumindest eine Strahlfalle vorgesehen ist, die beim Einbringen der Einkoppelvorrichtung (31) über eine Hebelvorrichtung (71) in den Detektionsstrahlengang verfährt.

7. Verwendung des Rastermikroskops (1) nach einem der Ansprüche 1 bis 6, **dadurch gekennzeichnet, dass** - vorzugsweise motorisch gesteuert - ein Umlenkelement in den Detektionsstrahlengang einbringbar ist, das das Licht vom Experiment zu dem Detektor lenkt.

8. Verwendung des Rastermikroskops (1) nach einem der Ansprüche 1 bis 7, **dadurch gekennzeichnet, dass** das Rastermikroskop (1) ein konfokales Rastermikroskop ist.

9. Verwendung des Rastermikroskops (1) nach einem der Ansprüche 1 bis 8, **dadurch gekennzeichnet, dass** die Lichtquelle als Kontinuumslaser (55) ausgeführt ist, der "Photonic Band Gab"-Material beinhaltet.

## Claims

1. Use of a scanning microscope (1) for spectral detection of light from an experiment, the scanning microscope (1) comprising a light source (3) for illumination of a specimen (7), defining a detection beam path, a multiband detector or spectrometer being arranged in the detection beam path in order to split spectrally and detect the detection light (17) departing from the specimen with a dispersive element (23), a coupling-in device (31) is introducable into the scanning microscope (1) upstream of the dispersive element (23), the coupling-in device (31) being connected to a light guide (37), which supplies light from the experiment, which is performed away from the scanning microscope (1), to the coupling-in device (31), which couples the light in parallel into the detection beam path, directs it onto the optical axis of the detection beam path and supplies it via the dispersive element (23) to the multiband detector or spectrometer.

2. Use of the scanning microscope (1) according to claim 1, **characterised in that** a mirror arrangement (25) is provided, which supplies the spectrally split detection light to two different individual detectors (27, 29).

3. Use of the scanning microscope according to claim 1, **characterised in that** the experiment is performed on the specimen itself and **in that** transmitted light from the specimen (7) is supplied to the coupling-in device (31).

4. Use of the scanning microscope according to claim 1, **characterised in that** the coupling-in device (31) comprises a plug-in connector (35) for connection with the light guide (37) provided with a plug, **in that**, additionally, a coupling-out optical system (41) for coupling the light out of the light guide (37) is provided and **in that** a mirror of the coupling-in device (31) directs the light from the light guide (37) onto the optical axis of the detection beam path.

5. Use of the scanning microscope (1) according to any one of claims 1 to 4, **characterised in that** a closing device automatically closes off the coupling-in device (31) in a largely light-proof manner relative to the exterior if the light guide (37) is removed.

6. Use of the scanning microscope (1) according to any one of claims 1 to 5, **characterised in that** at least one beam dump is provided, which travels into the detection beam path by means of a lever device (71) on introduction of the coupling-in device (31).

7. Use of the scanning microscope (1) according to any one of claims 1 to 6, **characterised in that** a deflection element, which directs the light from the experiment towards the detector, may be introduced into the detection beam path, preferably under motor control.

8. Use of the scanning microscope (1) according to any one of claims 1 to 7, **characterised in that** the scanning microscope (1) is a confocal scanning microscope.

9. Use of the scanning microscope (1) according to any one of claims 1 to 8, **characterised in that** the light source takes the form of a continuum laser (55), which contains "photonic band gap" material.

## Revendications

1. Utilisation d'un microscope à balayage (1) pour la détection spectrale de la lumière provenant d'une expérience, étant donné que le microscope à balayage (1) comprend une source de lumière (3) pour l'éclairage d'un échantillon (7), définit une trajectoire des rayons de détection, étant donné que, dans la trajectoire des rayons de détection, est disposé un détecteur multibande ou un spectromètre afin de décomposer de manière spectrale et détecter avec un élément dispersif (23) la lumière de détection (17) partant de l'échantillon, que peut être installée dans le microscope à balayage (1) un dispositif de couplage (31) en amont de l'élément dispersif (23), étant donné que le dispositif de couplage (31) est relié à un guide d'ondes lumineuses (37) qui conduit la lumière provenant de l'expérience, qui est réalisée hors du microscope à balayage (1), dans le dispositif de couplage (31) qui couple la lumière parallèlement dans la trajectoire des rayons de détection, l'oriente sur l'axe optique de la trajectoire des rayons de détection et la conduit par l'intermédiaire de l'élément dispersif (23) dans le détecteur multibande ou le spectromètre.

2. Utilisation du microscope à balayage (1) selon la revendication 1, **caractérisée en ce qu'**est prévu un arrangement de réflecteurs (25) qui conduit la lumière de détection décomposée de manière spectrale à deux détecteurs individuels (27, 29) différents.

3. Utilisation du microscope à balayage (1) selon la revendication 1, **caractérisée en ce que** l'expérience se réalise sur l'échantillon lui-même et **en ce que** de la lumière de transmission de l'échantillon (7) est conduite dans le dispositif de couplage (31).

4. Utilisation du microscope à balayage (1) selon la revendication 1, **caractérisée en ce que** le dispositif de couplage (31) comprend un accouplement à fiches (35) pour la liaison avec le guide d'ondes lumineuses (37) doté d'une fiche, en outre **en ce qu'**un système optique de découplage (41) est prévu pour le découplage de la lumière partant du guide d'ondes lumineuses (37) et **en ce qu'**un réflecteur du dispositif de couplage (31) oriente la lumière partant du guide d'ondes lumineuses sur l'axe optique de la trajectoire des rayons de détection.

5. Utilisation du microscope à balayage (1) selon l'une quelconque des revendications 1 à 4, **caractérisée en ce qu'**un dispositif de fermeture ferme automatiquement le dispositif de couplage (31) vers l'extérieur de manière presque étanche à la lumière lorsque le guide d'ondes lumineuses (37) est enlevé.

6. Utilisation du microscope à balayage (1) selon l'une quelconque des revendications 1 à 5, **caractérisée en ce qu'**est prévue au moins un piège de rayons qui, lorsqu'on installe le dispositif de couplage (31), se déplace sous l'effet d'un dispositif à levier (71) dans la trajectoire des rayons de détection.

7. Utilisation du microscope à balayage (1) selon l'une quelconque des revendications 1 à 6, **caractérisée en ce que** peut être installé, de préférence par commande motorisée, un élément déflecteur dans la trajectoire des rayons de détection, élément qui dévie la lumière de l'expérience vers le détecteur.

8. Utilisation du microscope à balayage (1) selon l'une quelconque des revendications 1 à 7, **caractérisée en ce que** le microscope à balayage (1) est un microscope à balayage confocal.

9. Utilisation du microscope à balayage (1) selon l'une quelconque des revendications 1 à 8, **caractérisée en ce que** la source de lumière est construite comme laser continu (55) qui contient du matériau « Photonic Band Gab ».
